# EUROPÄISCHE PATENTANMELDUNG

(11) **EP 4 383 681 A1**
(43) Veröffentlichungstag der Anmeldung: **12.06.2024**
(21) Anmeldenummer: 22211749.1
(22) Anmeldetag: 06.12.2022
(51) Int. Cl.: H04L 67/00, H04L 9/40, G06F 21/62

(54) **WEBBASIERTES ARBEITSGERÄTSYSTEM UND ZUGEHÖRIGES DATENZUGRIFFSVERFAHREN**

(71) Anmelder: Andreas Stihl AG & Co. KG, 71336 Waiblingen (DE)
(72) Erfinder: Ebel, Leslie Fabiola, 71409 Schwaikheim (DE); Bobert, Martin, 71334 Waiblingen (DE)
(74) Vertreter: Patentanwälte Ruff, Wilhelm, Beier, Dauster & Partner mbB

(57) **Zusammenfassung**

1. Webbasiertes Arbeitsgerätsystem und zugehöriges Datenzugriffsverfahren.

2. Das erfindungsgemäße webbasierte Arbeitsgerätsystem umfasst mindestens ein Arbeitsgerät (1), insbesondere ein Garten- oder Forstbearbeitungsgerät, eine Datenbereitstellungsvorrichtung (2) zur Bereitstellung von Geräteinformationsdaten und Betriebseinstelldaten des Arbeitsgerätes (1), eine geräteseitige Datenkommunikationseinheit (3) und eine langreichweitigen Datenaustauschverbindung (4), insbesondere einer Internetverbindung, zwischen der geräteseitigen Datenkommunikationseinheit (3) und der Datenbereitstellungsvorrichtung (2), eine Geräte-App mit Schreiblesezugriff auf die Betriebseinstelldaten des Arbeitsgerätes (1) in der Datenbereitstellungsvorrichtung (2), ein Nutzer-Endgerät (6) zur nutzerseitigen Bedienung der Geräte-App, eine Service-App mit Lesezugriff auf die Geräteinformationsdaten in der Datenbereitstellungsvorrichtung (2) und mit temporärem Schreibzugriff auf die von der Datenbereitstellungsvorrichtung (2) bereitgestellten Betriebseinstelldaten des Arbeitsgerätes (1), wobei der temporäre Schreibzugriff eine nutzerseitige Zugriffsfreigabe über die Geräte-App erfordert, und ein Service-Endgerät (8) zur serviceseitigen Bedienung der Service-App.

## Beschreibung

Die Erfindung bezieht sich auf ein webbasiertes Arbeitsgerätsystem mit mindestens einem Arbeitsgerät, einer Datenbereitstellungsvorrichtung zur Bereitstellung von Geräteinformationsdaten und Betriebseinstelldaten des Arbeitsgerätes, einer Geräte-App mit Schreiblesezugriff auf die Betriebseinstelldaten des Arbeitsgerätes in der Datenbereitstellungsvorrichtung und einem Nutzer-Endgerät zur nutzerseitigen Bedienung der Geräte-App sowie auf ein zugehöriges Datenzugriffsverfahren zum Zugreifen auf die von der Datenbereitstellungsvorrichtung bereitgestellten Betriebseinstelldaten des mindestens einen Arbeitsgerätes.

Bei dem Arbeitsgerät kann es sich beispielsweise um ein Garten- oder Forstbearbeitungsgerät, wie eine Motorsäge oder einen Rasenmähroboter, ein in der Bautechnik verwendetes Bauarbeitsgerät, ein Heimwerkergerät, wie eine Handbohrmaschine oder einen Akkuschrauber, einen Staubsaugerroboter etc. handeln. Die Geräteinformationsdaten können insbesondere Daten bezüglich Seriennummer, Gerätemodell und Statusinformationen umfassen, wie Informationen über etwaige Fehlerzustände, Wartungsinformationen und Informationen über verfügbare Kommunikationswege, wie Mobilfunkverbindung und/oder WiFi-Verbindung.

Webbasierte Arbeitsgerätsysteme und zugehörige Datenzugriffsverfahren dieser Art sind verschiedentlich bekannt und werden in jüngerer Zeit vermehrt eingesetzt, um es dem Benutzer zu ermöglichen, das jeweilige Arbeitsgerät bei Bedarf zumindest teilweise über das World-Wide-Web bedienen bzw. in seinem Betrieb beeinflussen zu können. Als Nutzer-Endgerät dient dabei meist ein Smartphone oder ein Tablet, wobei auch je nach Fall andere Endgeräte in Gebrauch sind, wie Smartwatches, Augmented-Reality(AR)-Brillen sowie Laptops bzw. portable Personal-Computer. Über das Nutzer-Endgerät kann die dem Arbeitsgerät zugeordnete Geräte-App bedient werden, über die mit dem Arbeitsgerät kommuniziert werden kann, beispielsweise über das Internet. Insbesondere kann der Benutzer über die Geräte-App Betriebseinstelldaten des Arbeitsgerätes einsehen, d.h. lesen, und bei Bedarf mittels entsprechendem Schreibzugriff auch ändern. Der Begriff App wird hierbei vorliegend in seiner breiten Bedeutung als Anwendungssoftware benutzt, was insbesondere mobile Apps, Web-Apps und Desktop-Apps umfasst.

Die Offenlegungsschrift WO 2017/097893 A2 offenbart ein webbasiertes Arbeitsgerätsystem, bei dem das Arbeitsgerät ein mobiler autonomer Serviceroboter ist, z.B. ein Fußbodenreinigungsroboter oder ein Rasenmähroboter. Bei diesem System können der Roboter und ein mobiles, nutzerseitiges Endgerät zur Steuerung des Roboters wahlweise über eine lokale drahtlose Kommunikationsverbindung oder über eine von einem Kommunikationsserver vermittelte, indirekte Kommunikationsverbindung kommunizieren, wobei versucht wird, die Kommunikationsverbindung zu wechseln, wenn eine der beiden Verbindungen abreißt oder nicht aufgebaut werden kann.

Wenn der Benutzer eines Arbeitsgerätes Fragen oder Wünsche zum Betrieb seines Gerätes hat, wie im Fall der Inbetriebnahme oder im Fall von Problemen im Betrieb des Gerätes, wendet er sich üblicherweise an einen entsprechenden Support bzw. Service, d.h. eine Servicestelle, wie z.B. einen vom Hersteller des Arbeitsgerätes autorisierten Händler oder Kundendienst. Herkömmlicherweise bringt der Benutzer dazu das Arbeitsgerät zur Servicestelle, damit diese vor Ort das Problem beheben bzw. das Arbeitsgerät in seinen Betriebseinstellungen in der vom Benutzer gewünschten Weise ändern kann, oder er erfragt bei der Servicestelle die gewünschten Informationen, mit denen er dann versuchen kann, die betreffenden Eingriffe an seinem Arbeitsgerät vorzunehmen, beispielsweise um ein Problem im Betrieb des Arbeitsgerätes zu beseitigen oder Betriebseinstellungen des Arbeitsgerätes zu verändern.

Der Erfindung liegt als technisches Problem die Bereitstellung eines webbasierten Arbeitsgerätsystems und eines zugehörigen Datenzugriffsverfahrens der eingangs genannten Art zugrunde, die gegenüber dem Stand der Technik weitergehende Verbesserungen bieten, insbesondere im Hinblick auf eine effiziente Serviceunterstützung von Gerätenutzern mit effizienter Zugriffskontrolle auf gerätebezogene Daten.

Die Erfindung löst dieses Problem durch die Bereitstellung eines webbasierten Arbeitsgerätsystems mit den Merkmalen des Anspruchs 1 und eines Datenzugriffsverfahrens mit den Merkmalen des Anspruchs 9. Vorteilhafte Weiterbildungen der Erfindung sind in den Unteransprüchen angegeben, deren Wortlaut hiermit durch Verweis zum Bestandteil der Beschreibung gemacht wird. Dies schließt insbesondere auch alle Ausführungsformen der Erfindung ein, die sich aus den Merkmalskombinationen ergeben, die durch die Rückbezüge in den Unteransprüchen definiert sind.

Das erfindungsgemäße webbasierte Arbeitsgerätsystem umfasst eine beliebige Anzahl von einem oder mehreren Arbeitsgeräten, wie beispielsweise ein Garten- oder Forstbearbeitungsgerät, und umfasst des Weiteren die Datenbereitstellungsvorrichtung zur Bereitstellung von Geräteinformationsdaten und Betriebseinstelldaten des Arbeitsgerätes, eine geräteseitige Datenkommunikationseinheit und eine langreichweitige Datenaustauschverbindung, insbesondere eine Internetverbindung, zwischen der geräteseitigen Datenkommunikationseinheit und der Datenbereitstellungsvorrichtung, eine Geräte-App mit Schreiblesezugriff auf die Betriebseinstelldaten des Arbeitsgerätes in der Datenbereitstellungsvorrichtung, ein Nutzer-Endgerät zur nutzerseitigen Bedienung der Geräte-App, eine Service-App mit Lesezugriff auf die Geräteinformationsdaten in der Datenbereitstellungsvorrichtung und mit temporärem Schreibzugriff auf die von der Datenbereitstellungsvorrichtung bereitgestellten Betriebseinstelldaten des Arbeitsgerätes, wobei der temporäre Schreibzugriff eine nutzerseitige Zugriffsfreigabe über die Geräte-App erfordert, und ein Service-Endgerät zur serviceseitigen Bedienung der Service-App. Es versteht sich, dass die Service-App je nach Bedarf auch Lesezugriff auf die Betriebseinstelldaten des Arbeitsgerätes hat. Die Autorisierung dieses Lesezugriffs kann in entsprechenden Ausführungen in gleicher Weise realisiert sein wie der temporäre Schreibzugriff, dies ist jedoch nicht zwingend. Mit anderen Worten kann die Autorisierung des Lesezugriffs auf die Betriebseinstelldaten des Arbeitsgerätes in einer anderen, üblichen Weise erfolgen, z.B. analog zur Autorisierung des Lesezugriffs auf die Geräteinformationsdaten oder alternativ in anderer herkömmlicher Weise.

Die Datenbereitstellungsvorrichtung kann insbesondere einen Datenspeicher mit zugehörigen Peripheriekomponenten umfassen und kann beispielsweise als eine Datenbank mit einer herkömmlichen Datenbankstruktur bzw. Datenbankarchitektur und/oder als ein Cloud-Backend herkömmlicher Struktur und/oder als Internet-Of-Things(loT)-Plattform herkömmlicher Struktur ausgeführt sein. Je nach Bedarf und Anwendungsfall kann die Datenbereitstellungsvorrichtung hierbei in an sich bekannter Weise weitere in Software und/oder Hardware ausgeführte Dienste umfassen, wie Objekt-Speicher, Programmierschnittste, Microservices und/oder SQL(Structured-Query-Language)- oder noSQL-Datenbanken. Die Datenbereitstellungsvorrichtung kann je nach Bedarf dafür eingerichtet sein, die bereitzustellenden Geräteinformationsdaten und/oder die bereitzustellenden Betriebseinstelldaten längerfristig abzuspeichern oder nur kurzzeitig zu halten, z.B. in Form eines nicht historisierenden, reinen Vorhaltens der Daten beispielsweise nur bis zu einem nächsten Statusupdate.

Mit der langreichweitigen Datenaustauschverbindung ist vorliegend eine Datenaustauschverbindung mit einer Reichweite gemeint, die länger als typische lokale Reichweiten im Bereich von bis zu wenigen zehn Metern ist, wobei es sich insbesondere um eine Internetverbindung handeln kann. Im Unterschied dazu wird vorliegend eine Datenaustauschverbindung mit einer Reichweite im Bereich bis zu wenigen zehn Metern als kurzreichweitige Datenaustauschverbindung bezeichnet.

Die genannten Eigenschaften des webbasierten Arbeitsgerätsystems der Erfindung schaffen günstige Voraussetzungen für eine effiziente Serviceunterstützung von Benutzern des oder der Arbeitsgeräte des Systems mit effizienter Zugriffskontrolle und hoher Betriebssicherheit in Bezug auf Daten des jeweiligen Arbeitsgerätes, insbesondere der von der Datenbereitstellungsvorrichtung bereitgestellten Geräteinformationsdaten und Betriebseinstelldaten. Insbesondere ermöglicht dieses System eine effiziente Ausführung von Betriebseinstellungen des Arbeitsgerätes durch einen Support, wie einen Kundendienst oder einen Händler. Der Support, d.h. die Servicestelle, kann vom Benutzer bezüglich eines entsprechenden Support/Service-Eingriffs angefragt werden und kann direkt, d.h. zeitsynchron, optional in Echtzeit, einen entsprechenden Eingriff in die Arbeitsgerätdaten vornehmen, wie das Lesen von Geräteinformationsdaten und das Lesen und/oder Ändern von Betriebseinstelldaten des Arbeitsgerätes. Speziell kann die Support/Service-Stelle, wenn sie vom Benutzer um Hilfestellung gebeten wird, über die Service-App beim Benutzer an dessen Geräte-App wegen eines Datenzugriffs anfragen, und der Benutzer kann den Zugriff dann geeignet temporär freigeben, z.B. ebenfalls über die Geräte-App. Alternativ kann die Zugriffsanfrage in einer anderen, an sich herkömmlichen Weise erfolgen, z.B. über eine Anfrage per Telefon, per E-Mail oder dergleichen.

Die Service-App ist in vorteilhaften Ausführungen als webbasierte Service-App ausgeführt.

Das System ist somit dafür eingerichtet, über die z.B. webbasierte Service-App einen Schreibzugriff auf die Betriebseinstelldaten des Arbeitsgerätes nur temporär und erst dann zuzulassen, wenn der Benutzer dies über die Geräte-App freigegeben hat. Zusätzliche Software für die Interaktion zwischen Support und dem Arbeitsgerät ist nicht zwingend erforderlich, diese Interaktion kann durch entsprechende Systemauslegung über die ohnehin vorhandene Geräte-App erfolgen.

Bei entsprechender Auslegung lässt sich mit diesem Arbeitsgerätsystem eine Doppelung von Funktionen weitgehend vermeiden, was insbesondere für relativ komplexe Funktionen von großem Vorteil ist, wobei dadurch auch konkurrierende Zugriffsversuche vermieden werden können. So lassen sich sehr einfach Edge-Cases auf Seiten des Arbeitsgerätes und/oder auf Seiten der Datenbereitstellungsvorrichtung vermeiden.

Das System trägt zu einer hohen Anwenderzufriedenheit bei, da in vielen Fällen ein Werkstattbesuch für den Benutzer entfallen kann. Zudem behält der Benutzer die Zugriffshoheit über die Betriebseinstellungen seines Arbeitsgerätes, indem die Support/Service-Stelle Veränderungen an diesen Einstellungen nur temporär und nur nach Freigabe durch den Benutzer vornehmen kann. Vorteilhaft ist des Weiteren, dass sich beim erfindungsgemäßen Arbeitsgerätsystem die Geräteinformationsdaten und Betriebseinstelldaten des Arbeitsgerätes außerhalb desselben in der Datenbereitstellungsvorrichtung befinden, wodurch kein direkter Zugriff der Service/Support-Stelle auf das Arbeitsgerät erforderlich ist.

In einer Weiterbildung der Erfindung befindet sich die geräteseitige Datenkommunikationseinheit im Arbeitsgerät oder ist von einer Kommunikations-Zwischenstation gebildet, der eine kurzreichweitige Datenaustauschverbindung mit dem Arbeitsgerät zugeordnet ist. Im erstgenannten Fall ist das Arbeitsgerät selbst mit der zugehörigen Datenkommunikationseinheit ausgestattet, im letztgenannten Fall befindet sich die Kommunikations-Zwischenstation außerhalb des Arbeitsgerätes, sei es in einem anderen von mehreren Arbeitsgeräten oder als separate Einheit außerhalb aller Arbeitsgeräte. Dabei ist die Kommunikations-Zwischenstation vorzugsweise mehreren Arbeitsgeräten gemeinsam zugeordnet und befindet sich lokal im Bereich der zugeordneten Arbeitsgeräte, so dass die Arbeitsgeräte über die kurzreichweitige Datenaustauschverbindung mit der Kommunikations-Zwischenstation und über diese gebündelt mit der Datenbereitstellungsvorrichtung kommunizieren können.

In einer Weiterbildung der Erfindung beinhaltet der temporäre Schreibzugriff der Service-App auf die Betriebseinstelldaten des Arbeitsgerätes eine Zugriffsanfrage der Service-App an die Geräte-App für das Arbeitsgerät, wobei die Zugriffsanfrage einer nutzerseitigen Freigabe bedarf. Vorteilhaft ist durch diese Maßnahme die Freigabe des Datenzugriffs für die Service-App zwecks temporärem Schreibzugriff auf die Betriebseinstelldaten des Arbeitsgerätes durch den Benutzer dahingehend realisiert, dass die Service-App eine entsprechende Zugriffsanfrage an die Geräte-App stellt, die der Benutzer dann freigeben kann. Somit wird der Kommunikationskanal zwischen Service-App und Geräte-App vorteilhaft auch für diese Zugriffsanfrage genutzt. Alternativ keine eine andere, herkömmliche Realisierung für das Anfragen des benötigten Datenzugriffs von der Serviceseite an die Benutzerseite vorgesehen sein.

In einer Ausgestaltung der Erfindung ist die Zugriffsanfrage eine tokenbasierte Zugriffsanfrage und über einen Absprung, z.B. in Form eines Aufrufs, in der Service-App zur Geräte-App auswählbar. Diese Art der Zugriffsanfrage ist hinsichtlich Bedienkomfort und Datensicherheit vorteilhaft. Die Servicestelle braucht für die Zugriffsanfrage nur den betreffenden Absprung in der Service-App auswählen.

In einer Ausgestaltung der Erfindung umfassen die Geräteinformationsdaten Geräteidentifikationsdaten, welche die Service-App zur Identifikation des Arbeitsgerätes für die Zugriffsanfrage an die Geräte-App und/oder für den temporären Schreibzugriff auf die von der Datenbereitstellungsvorrichtung bereitgestellten Betriebseinstelldaten des Arbeitsgerätes nutzt. Diese Maßnahme ermöglicht der Serviceseite eine einfache Identifikation des in Rede stehenden Arbeitsgerätes, für das ein Benutzer Servicehilfe begehrt. Alternativ sind andere, herkömmliche Arten der Geräteidentifikation für die Serviceseite möglich, z.B. eine direkte Übermittlung entsprechender Geräteidentifikationsdaten von der Benutzerseite zur Serviceseite.

In einer Weiterbildung der Erfindung ist der temporäre Schreibzugriff Teil eines Schreiblesezugriffs mit einem Schreibzugriff für eine vorgegebene Schreibzugriffsdauer und einem Lesezugriff für eine vorgegebene Lesezugriffsdauer, wobei die Lesezugriffsdauer gleich lang oder länger ist als die Schreibzugriffsdauer. Dies stellt eine für die meisten Anwendungen vorteilhafte Festlegung für die maximalen Zugriffsdauern dar, während denen es der Serviceseite möglich ist, temporär auf die entsprechenden Gerätedaten lesend bzw. schreibend zuzugreifen. Falls dies für bestimmte Anwendungen bevorzugt ist, kann die Lesezugriffsdauer alternativ kürzer festgelegt sein als die Schreibzugriffsdauer.

In einer Weiterbildung der Erfindung beendet die Service-App einen freigegebenen temporären Schreibzugriff auf die Betriebseinstelldaten eines von mehreren Arbeitsgeräten vorzeitig, wenn sie eine neue Zugriffsanfrage für einen temporären Schreibzugriff auf die Betriebseinstelldaten eines anderen Arbeitsgerätes an dessen zugeordnete Geräte-App sendet. Diese Maßnahme vermeidet in einfacher Weise etwaige Datenzugriffskollisionen. Alternativ kann das System auf eine gleichzeitige Abarbeitung von Schreibzugriffen auf die Betriebseinstelldaten mehrerer Arbeitsgeräte ausgelegt sein.

In einer Weiterbildung der Erfindung ist das Nutzer-Endgerät ein Smart-Device, insbesondere ein Smartphone oder ein Tablet oder ein portabler Personalcomputer oder ein Wearable-Device, i.e. körpergetragenes Gerät, wie eine Smartwatch oder eine Augmented-Reality(AR)-Brille. Dies ermöglicht die Verwendung solcher weit verbreiteter Endgeräte als Nutzer-Endgerät für das erfindungsgemäße Arbeitsgerätsystem.

In einer Weiterbildung der Erfindung ist das Arbeitsgerät ein autonomes Arbeitsgerät, z. B. ein Rasenmähroboter, ein Staubsaugerroboter, eine Motorsäge eine Heckenschere, ein Heckenschneider, ein Gehölzschneider, eine Astschere, ein Hoch-Entaster, ein Blasgerät, ein Laubbläser, ein Sauggerät, ein Laubsauger, ein Reinigungsgerät, ein Hochdruckreiniger, ein Spritz- und/oder Sprühgerät, ein Kehrgerät, eine Kehrwalze, eine Kehrbürste, ein Rasenmäher, eine Grasschere, ein Vertikutierer, ein Freischneideroder oder ein anderes Garten- oder Forstbearbeitungsgerät oder ein im Baugewerbe benutzes Bau-Arbeitsgerät, wie ein Trennschleifer oder ein Gesteinsschneider, oder ein im Heimwerkerbereich benutztes Heimwerkergerät. Dies stellt vorteilhafte Einsatzbereiche des erfindungsgemäßen Arbeitsgerätsystems dar, wobei das System insbesondere auch unterschiedliche Arbeitsgeräte umfassen kann, z.B. sowohl einen oder mehrere Rasenmähroboter als auch eine oder mehrere Motorsägen, wie beispielsweise eine Motorsäge und ein Mäher beim gleichen Benutzer.

Das erfindungsgemäße Datenzugriffsverfahren eignet sich insbesondere für das erfindungsgemäße webbasierte Arbeitsgerätsystem und dient zum Zugreifen auf die von einer Datenbereitstellungsvorrichtung bereitgestellten Betriebseinstelldaten mindestens eines Arbeitsgerätes durch eine Service-App. Gemäß diesem Datenzugriffsverfahren wird nutzerseitig eine Serviceanforderung übertragen, i.e. gesendet, die eine Identifikationsinformation und eine Servicewunschinformation zu dem Arbeitsgerät umfasst. Serviceseitig wird die Serviceanforderung empfangen, und von der Service-App wird eine Zugriffsanfrage an eine Geräte-App für einen temporären Schreibzugriff auf die von der Datenbereitstellungsvorrichtung bereitgestellten Betriebseinstelldaten des Arbeitsgerätes gesendet. Nutzerseitig wird über die Geräte-App die Zugriffsanfrage empfangen und der angefragte temporäre Schreibzugriff auf die von der Datenbereitstellungsvorrichtung bereitgestellten Betriebseinstelldaten des Arbeitsgerätes freigegeben. Die Betriebseinstelldaten des Arbeitsgerätes in der Datenbereitstellungsvorrichtung werden durch die Service-App während des freigegebenen temporären Schreibzugriffs entsprechend der Servicewunschinformation durch Lesezugriff gelesen und bei Bedarf durch Schreibzugriff geändert. Nach Ablauf einer vorgegebenen Freigabedauer wird der freigegebene temporäre Schreibzugriff automatisch beendet. Aufgrund dieser Eigenschaften besitzt das erfindungsgemäße Datenzugriffsverfahren die oben zum erfindungsgemäßen webbasierten Arbeitsgerätsystem erwähnten Funktionalitäten und Vorteile in analoger Weise.

In einer Weiterbildung des erfindungsgemäßen Datenzugriffsverfahrens werden Daten zwischen einer geräteseitigen Datenkommunikationseinheit und der Datenbereitstellungsvorrichtung über eine langreichweitige Datenaustauschverbindung, insbesondere eine Internetverbindung, ausgetauscht. Dies ermöglicht den gewünschten Datenaustausch zwischen der geräteseitigen Datenkommunikationseinheit einerseits und der Datenbereitstellungsvorrichtung andererseits auch dann, wenn sich diese in entsprechend großer räumlicher Entfernung voneinander befinden.

In einer Ausgestaltung des erfindungsgemäßen Datenzugriffsverfahrens wird die geräteseitige Datenkommunikationseinheit im Arbeitsgerät angeordnet oder als eine Kommunikations-Zwischenstation ausgebildet, die Daten mit dem Arbeitsgerät über eine kurzreichweitige Datenaustauschverbindung austauscht. Zu den Vorteilen und Wirkungen dieser Maßnahme kann auf die obigen, analogen Ausführungen bezüglich des entsprechend weitergebildeten Arbeitsgerätsystems verwiesen werden.

In einer Weiterbildung des erfindungsgemäßen Datenzugriffsverfahrens wird die Zugriffsanfrage durch eine tokenbasierte Zugriffsanfrage gebildet und über einen Absprung in der Service-App zur Geräte-App ausgewählt. Zu den Vorteilen und Wirkungen dieser Maßnahme kann auf die obigen, analogen Ausführungen bezüglich des entsprechend ausgestalteten Arbeitsgerätsystems verwiesen werden.

In einer Weiterbildung des erfindungsgemäßen Datenzugriffsverfahrens nutzt die Service-App Geräteidentifikationsdaten als Geräteinformationsdaten zur Identifikation des Arbeitsgerätes für die Zugriffsanfrage an die Geräte-App und/oder für den temporären Schreibzugriff auf die in der Datenbereitstellungsvorrichtung gespeicherten Betriebseinstelldaten des Arbeitsgerätes. Zu den Vorteilen und Wirkungen dieser Maßnahme kann auf die obigen, analogen Ausführungen bezüglich des entsprechend ausgestalteten Arbeitsgerätsystems verwiesen werden.

In einer Weiterbildung des erfindungsgemäßen Datenzugriffsverfahrens wird die Freigabedauer für einen Schreibzugriff als Schreibzugriffsdauer und für einen Lesezugriff als Lesezugriffsdauer vorgegeben, wobei die Lesezugriffsdauer gleich lang oder länger vorgegeben wird als die Schreibzugriffsdauer. Zu den Vorteilen und Wirkungen dieser Maßnahme kann auf die obigen, analogen Ausführungen bezüglich des entsprechend weitergebildeten Arbeitsgerätsystems verwiesen werden.

In einer Weiterbildung des erfindungsgemäßen Datenzugriffsverfahrens wird ein freigegebener temporärer Schreibzugriff auf die Betriebseinstelldaten eines von mehreren Arbeitsgeräten vorzeitig beendet, wenn von der Service-App eine neue Zugriffsanfrage für einen temporären Schreibzugriff auf die Betriebseinstelldaten eines anderen Arbeitsgerätes an dessen zugeordnete Geräte-App gesendet wird. Zu den Vorteilen und Wirkungen dieser Maßnahme kann auf die obigen, analogen Ausführungen bezüglich des entsprechend weitergebildeten Arbeitsgerätsystems verwiesen werden.

Vorteilhafte Ausführungsformen der Erfindung sind in den Zeichnungen dargestellt. Diese und weitere Ausführungsformen der Erfindung werden nachfolgend näher erläutert. Hierbei zeigen:
Fig. 1 eine schematische Blockdiagrammdarstellung eines webbasierten Arbeitsgerätsystems,
Fig. 2 eine schematische Blockdiagrammdarstellung eines datenverarbeitungstechnischen Systemteils des Arbeitsgerätsystems und
Fig. 3 ein schematisches Flussdiagramm eines für das Arbeitsgerätsystem der Fig. 1 und 2 verwendbaren Datenzugriffsverfahrens.

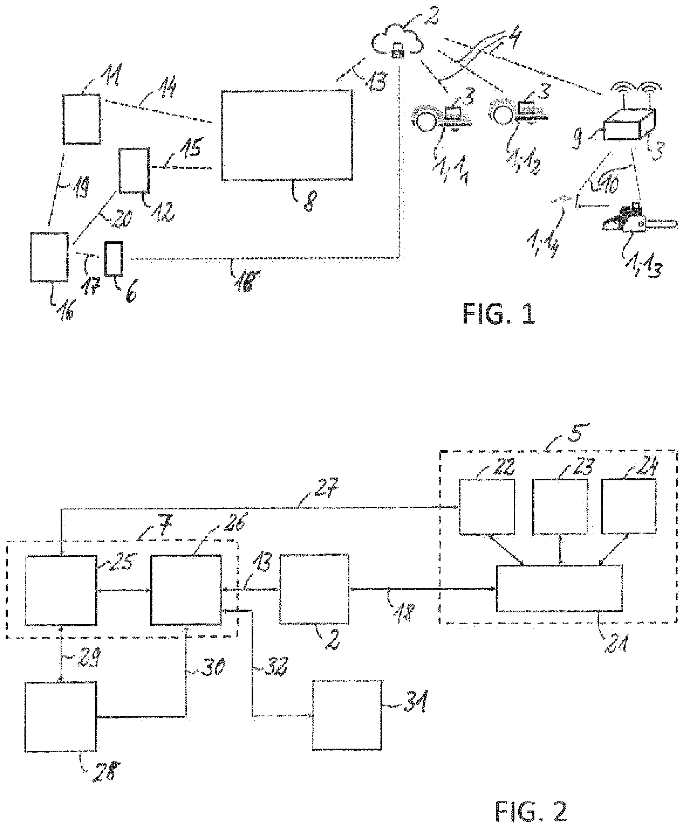

Das in den Fig. 1 und 2 veranschaulichte webbasierte Arbeitsgerätsystem umfasst ein oder mehrere Arbeitsgeräte 1, eine Datenbereitstellungsvorrichtung 2 zur Bereitstellung von Gerätinformationsdaten und von Betriebseinstelldaten des Arbeitsgerätes 1, eine geräteseitige Datenkommunikationseinheit 3 und eine langreichweitige Datenaustauschverbindung 4 zwischen der geräteseitigen Datenkommunikationseinheit 3 und der Datenbereitstellungsvorrichtung 2, eine Geräte-App 5 mit Schreib-/Lesezugriff auf die Betriebseinstelldaten des Arbeitsgerätes 1 in der Datenbereitstellungsvorrichtung 2, ein Nutzer-Endgerät 6 zur nutzerseitigen Bedienung der Geräte-App 5, eine Service-App 7, z.B. in Form einer webbasierten Service-App, und ein Service-Endgerät 8 zur serviceseitigen Bedienung der Service-App 7.

Das jeweilige Arbeitsgerät 1 kann insbesondere ein Rasenmähroboter, siehe die Arbeitsgeräte 1₁ und 1₂ in Fig. 1, eine Motorsäge oder Heckenschere, siehe die Arbeitsgeräte 1₃, 1₄ in Fig. 1, ein anderes Garten- oder Forstbearbeitungsgerät bzw. ein beliebiges anderes, autonomes oder nicht-autonomes Arbeitsgerät sein, beispielsweise auch ein im Baugewerbe verwendetes Bau-Arbeitsgerät oder ein im Heimwerkerbereich verwendetes Heimwerkergerät oder ein Staubsaugerroboter.

Bei der langreichweitigen Datenaustauschverbindung 4 kann es sich insbesondere um eine Internetverbindung oder eine Mobilfunkverbindung handeln.

Die webbasierte Service-App 7 hat zumindest Lesezugriff auf die Geräteinformationsdaten in der Datenbereitstellungsvorrichtung 2 und temporären Schreibzugriff auf die von der Datenbereitstellungsvorrichtung 2 bereitgestellten Betriebseinstelldaten des jeweiligen Arbeitsgerätes 1. Dabei erfordert der temporäre Schreibzugriff der Service-App 7 auf die Betriebseinstelldaten des Arbeitsgerätes 1 eine nutzerseitige Zugriffsfreigabe über die Geräte-App 5, d.h. der Schreibzugriff ist nur temporär und nur dann möglich, wenn er vom Benutzer des Arbeitsgerätes 1 freigegeben wird. Dabei erfolgt der temporäre Schreibzugriff der Service-App 7 auf die Betriebseinstelldaten des Arbeitsgerätes 1 in geeigneter, an sich üblicher Weise über eine zugehörige Kommunikationsverbindung. Zusätzlich hat die Service-App 7 in geeigneter, benötigter Weise Zugriff auf die Betriebseinstelldaten des Arbeitsgerätes 1, wobei die Autorisierung dieses Lesezugriffs in gleicher oder alternativ in anderer Weise realisiert sein kann wie der temporäre Schreibzugriff.

Die Datenbereitstellungsvorrichtung 2 ist im gezeigten Beispiel als eine Cloud-Lösung mit einer dem Fachmann an sich bekannten Cloud-Struktur bzw. Cloud-Architektur einschließlich eines zugehörigen Cloud-Backends bzw. einer zugehörigen loT-Plattform realisiert, was hier keiner näheren Erläuterungen bedarf. In alternativen Ausführungen kann die Datenbereitstellungsvorrichtung 2 z.B. auch eine in ihrem Aufbau an sich bekannte Datenbank bzw. ein Datenspeicher mit zugehörigen Peripheriekomponenten sein.

In entsprechenden Ausführungsformen befindet sich die geräteseitige Datenkommunikationseinheit 3 im Arbeitsgerät 1, im gezeigten Beispiel ist dies bei den Rasenmährobotern als Arbeitsgeräte 1₁ und 1₂ der Fall, oder die geräteseitige Datenkommunikationseinheit 3 ist von einer Kommunikations-Zwischenstation 9 gebildet, der eine kurzreichweitige Datenaustauschverbindung 10 mit dem Arbeitsgerät 1 zugeordnet ist, wie dies im gezeigten Beispiel für die Motorsägen bzw. Heckenscheren als Arbeitsgeräte 1₃, 1₄ der Fall ist. Die Kommunikations-Zwischenstation 9 kann insbesondere von einem Gateway mit herkömmlicher Gateway-Struktur bzw. -Architektur gebildet sein. Die kurzreichweitige Datenaustauschverbindung 10 kann z.B. je nach Bedarf eine kurzreichweitige Funkverbindung, wie eine Bluetooth-Verbindung, oder dgl. sein. Die Kommunikations-Zwischenstation 9 ist insbesondere dafür eingerichtet, von den angekoppelten Arbeitsgeräten 1₃, 1₄ kurzreichweitig übermittelte Daten zu empfangen und diese über die langreichweitige Datenaustauschverbindung 4 an die in der Regel räumlich weit entfernt angeordnete Datenbereitstellungsvorrichtung 2 zu übertragen. Umgekehrt ist die Kommunikations-Zwischenstation 9 zudem in der Lage, langreichweitig von der Datenbereitstellungsvorrichtung 2 übermittelte Daten zu empfangen und bei Bedarf an die angekoppelten Arbeitsgeräte 1₃, 1₄ weiterzuleiten. Die Kommunikations-Zwischenstation 9 kann optional so ausgeführt sein, dass sie für die angekoppelten Arbeitsgeräte 1 zumindest einen Teil der ansonsten im Arbeitsgerät 1 selbst implementierten, für den Betrieb des Arbeitsgerätes 1 relevanten Datenverarbeitungsfunktionalitäten übernimmt.

In vorteilhaften Ausführungen beinhaltet der temporäre Schreibzugriff der Service-App 7 auf die Betriebseinstelldaten des Arbeitsgerätes 1 eine nutzerseitig freizugebende Zugriffsanfrage der Service-App 7 an die Geräte-App 5. Nur wenn der Benutzer des Arbeitsgerätes 1 diese Zugriffsanfrage positiv beantwortet und damit freigibt, z.B. über seine Geräte-App 5, ist es der Service-App 7 möglich, die Betriebseinstelldaten des zugehörigen Arbeitsgerätes 1 per Schreibzugriff zu ändern.

In entsprechenden Ausführungen ist die Zugriffsanfrage eine tokenbasierte Zugriffsanfrage, die serviceseitig über einen Absprung, wie z.B. einen Link, in der Service-App 7 zur Geräte-App 5 ausgewählt werden kann.

In vorteilhaften Realisierungen umfassen die Geräteinformationsdaten Geräteidentifikationsdaten, d.h. Daten zur Identifikation des betreffenden Arbeitsgerätes 1, wobei die Service-App 7 diese Geräteidentifikationsdaten dafür nutzt, das Arbeitsgerät 1 für die Zugriffsanfrage an die Geräte-App 5 zu identifizieren und/oder den temporären Schreibzugriff auf die von der Datenbereitstellungsvorrichtung 2 bereitgestellten Betriebseinstelldaten für das betreffende Arbeitsgerät 1 auszuführen.

In vorteilhaften Ausführungsformen ist der temporäre Schreibzugriff Teil eines temporären Schreiblesezugriffs der Service-App 7 auf die von der Datenbereitstellungsvorrichtung 2 bereitgestellten Betriebseinstelldaten des Arbeitsgerätes 1, der einen Schreibzugriff für eine vorgegebene Schreibzugriffsdauer und einen Lesezugriff für eine vorgegebene Lesezugriffsdauer umfasst, wobei letztere vorzugsweise gleich lang oder länger ist als die Schreibzugriffsdauer.

In vorteilhaften Ausführungen beendet die Service-App 7 einen freigegebenen temporären Schreibzugriff auf die Betriebseinstelldaten eines von mehreren Arbeitsgeräten 1 vorzeitig, wenn sie eine neue Zugriffsanfrage für einen temporären Schreibzugriff auf die Betriebseinstelldaten eines anderen Arbeitsgerätes 1 an dessen zugeordnete Geräte-App 5 sendet.

In entsprechenden Realisierungen ist das Nutzer-Endgerät 6 ein Smart-Device, beispielsweise ein Smartphone, ein Tablet, ein portabler Personal-Computer, eine Smartwatch oder eine AR-Brille.

Das Service-Endgerät 8 befindet sich bei einer Servicestelle. Im gezeigten Beispiel von Fig. 1 kann ein Support-Dienst 11 oder ein Händler-Dienst 12 auf das Service-Endgerät 8 zugreifen und über dieses mit dem übrigen webbasierten Arbeitsgerätsystem kommunizieren, insbesondere mit der Datenbereitstellungsvorrichtung 2, wie mit einer Kommunikationsverbindung 13 in Fig. 1 symbolisiert. Der Zugriff des Support-Dienstes 11 und/oder des Händler-Dienstes 12 auf das Service-Endgerät 8 kann je nach Bedarf direkt, z.B. über entsprechende Eingabe/Ausgabe-Schnittstellen des Service-Endgerätes 8, oder über eine kurz- oder langreichweitige Kommunikationsverbindung erfolgen, in Fig. 1 durch Verbindungen 14 und 15 symbolisiert. Ein Anwender bzw. Benutzer 16 hat über sein Nutzer-Endgerät 6 Kommunikationsverbindung mit dem übrigen Arbeitsgerätsystem, insbesondere mit der Datenbereitstellungsvorrichtung 2 über eine langreichweitige Datenaustauschverbindung 18. Eine Kopplungslinie 17 symbolisiert in Fig. 1 die Interaktion von Anwender 16 und Nutzer-Endgerät 6. Der Anwender 16 kann im gezeigten Beispiel von Fig. 1 zudem direkt Kontakt mit dem Support-Dienst 11 und/oder dem Händler-Dienst 12 aufnehmen, in Fig. 1 durch entsprechende Verbindungen 19, 20 symbolisiert, bei denen es sich beispielsweise um eine Telefonverbindung oder Mobilfunkverbindung handeln kann.

In Fig. 2 ist eine mögliche Realisierung für die Struktur bzw. Architektur des webbasierten Arbeitsgerätsystems mit einigen Einzelkomponenten näher veranschaulicht, die je nach Bedarf ganz oder teilweise in Hardware oder in Software ausgeführt sein können. In dieser Ausführung beinhaltet die Geräte-App 5, wie gezeigt, insbesondere ein Geräte-App-Backend 21 und einen Frontend-Teil, der ein Web-Frontend 22, ein iOS-Frontend 23 und ein Android-Frontend 24 mit jeweils üblicher Struktur umfasst, was hier keiner näheren Beschreibung bedarf.

Die Service-App 7 umfasst analog ein Service-App-Frontend 25 und ein Service-App-Backend 26. Das Service-App-Frontend 25 steht über eine Kommunikationsverbindung 27 mit dem Frontend-Teil 22, 23, 24 der Geräte-App 5 in Datenaustauschverbindung. Das Service-App-Backend 26 und das Geräte-App-Backend 21 stehen mit der Datenbereitstellungsvorrichtung 2 bzw. mit deren Cloud-Backend oder loT-Plattform über die bereits erwähnten langreichweitigen Datenaustauschverbindungen 13, 18 in Kontakt, bei denen es sich in entsprechenden Ausführungen z.B. um Cloud-to-Cloud(C2C)-Kommunikationskanäle handeln kann.

Zur Durchführung der Autorisierung bzw. Authentifikation der Service-App 7 für die temporären Schreibzugriffsvorgänge stehen das Frontend 25 und das Backend 26 der Service-App 7 mit einem entsprechenden Authentifizierungs-Dienst 28 über einen jeweiligen Kommunikationskanal 29, 30 in Verbindung. Je nach Bedarf und Anwendungsfall kann die Autorisierung z.B. die Maßnahme beinhalten, dass der Service-App-Nutzer in der Service-App autorisiert ist und zusätzlich eine weitere Identifikation und Autorisierung innerhalb der Geräte-App stattfindet.

Optional kann die Service-App 7 über ihr Backend 26 außer mit der Datenbereitstellungsvorrichtung 2 mit einer oder mehreren weiteren Datenbereitstellungsvorrichtungen in Datenaustauschverbindung stehen, in Fig. 2 durch einen Kontakt mit einer Datenbank 31 über eine zugehörige Datenaustauschverbindung 32 symbolisiert. In solchen weiteren Datenbanken können z.B. Daten unabhängig von gerätespezifischen Einstellungen vorgehalten sein, wie Kundendaten und/oder Kaufdaten und/oder Service-Daten des jeweiligen Arbeitsgeräts 1.

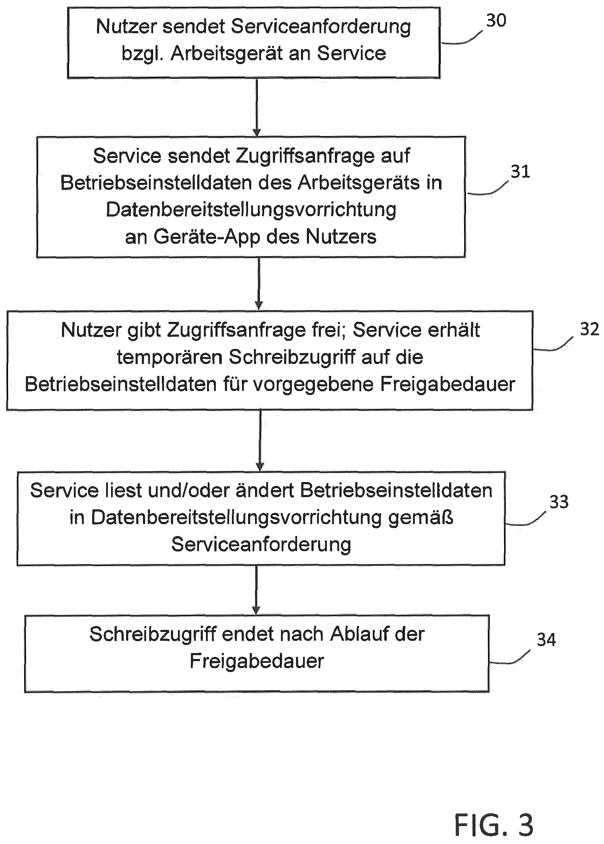

Fig. 3 veranschaulicht eine vorteilhafte Ausführung des erfindungsgemäßen Datenzugriffsverfahrens am Beispiel einer Verwendung bei einem webbasierten Arbeitsgerätsystem der in den Fig. 1 und 2 gezeigten Art. Das Datenzugriffsverfahren dient hierbei insbesondere zum Zugreifen auf alle oder einen Teil der von der Datenbereitstellungsvorrichtung 2 bereitgestellten Betriebseinstelldaten eines betreffenden Arbeitsgerätes 1 durch die Service-App 7.

Zunächst wird hierzu vom Benutzer, d.h. nutzerseitig, eine Serviceanforderung übertragen, die eine Identifikationsinformation und eine Servicewunschinformation umfasst, welche sich auf das betroffene Arbeitsgerät 1 des Benutzers beziehen. Der Benutzer, auch Nutzer oder Anwender genannt, kann sich dazu beispielsweise per Telefon, wie oben erwähnt, oder per E-Mail oder einen Messenger-Dienst mit einem Support- oder Händler-Dienst in Verbindung setzen, siehe Schritt 30 in Fig. 3. Hierzu kann optional eine zugehörige webbasierte Schnittstelle vorgesehen sein, begleitet von einer Integration eines entsprechenden Bedienelements bzw. Buttons in die Geräte-App. Die vom Nutzer gesendete Serviceanforderung wird serviceseitig empfangen, und über die Service-App 7 wird dann eine Zugriffsanfrage an die betreffende Geräte-App 5 für einen temporären Schreibzugriff auf die von der Datenbereitstellungsvorrichtung 2 bereitgestellten Betriebseinstelldaten des Arbeitsgerätes 1 gesendet, siehe Schritt 31 in Fig. 3. Nutzerseitig wird diese Zugriffsanfrage über die Geräte-App 5 empfangen, und der Benutzer gibt daraufhin den angefragten temporären Schreibzugriff auf die von der Datenbereitstellungsvorrichtung 2 bereitgestellten Betriebseinstelldaten des Arbeitsgerätes 1 frei, siehe Schritt 32 in Fig. 3. Dies versetzt Servicepersonal in die Lage, über die Service-App 7 die Betriebseinstelldaten des Arbeitsgerätes 1 in der Datenbereitstellungsvorrichtung 2 während des freigegebenen temporären Schreibzugriffs entsprechend der Servicewunschinformation des Benutzers durch Lesezugriff zu lesen und durch Schreibzugriff zu ändern, speziell über den Kommunikationskanal der Geräte-App 5, siehe Schritt 33 in Fig. 3. Nach Ablauf einer vorgegebenen Freigabedauer wird der nur für diese Dauer freigegebene temporäre Schreibzugriff automatisch beendet, siehe Schritt 34 in Fig. 3.

In vorteilhaften Ausführungen wird der freigegebene temporäre Schreibzugriff auf die Betriebseinstelldaten des betreffenden Arbeitsgerätes 1 vorzeitig beendet, wenn der Service über die Service-App 7 eine neue Zugriffsanfrage für einen temporären Schreibzugriff auf die Betriebseinstelldaten eines anderen Arbeitsgerätes 1 an dessen zugeordnete Geräte-App 5 sendet.

Nachstehend wird kurz an einem konkreten Beispielsfall aufgezeigt, wie der Servicewunsch eines Anwenders eines in ein erfindungsgemäßes System eingebundenen Arbeitsgerätes bearbeitet werden kann und welche Vorteile dies für die Beteiligten hat. Dabei wird der Einfachheit halber auf die in den Fig. 1 und 2 gezeigte Systemrealisierung Bezug genommen.

Für diesen Beispielfall sei angenommen, dass der Anwender 16 im Besitz eines Rasenmähroboters als Arbeitsgerät 1 ist und Unterstützung zur Anpassung eines für den Rasenmähroboter vorgebbaren Mähplans wünscht. Der Anwender 16 kontaktiert den Support-Dienst 11 oder den Händler-Dienst 12 z.B. telefonisch, und noch während dieser Kontaktaufnahme wählt ein Mitarbeiter des Support-Dienstes 11 oder Händler-Dienstes 12 über die Service-App 7 mittels eingegebener Geräteidentifikationsdaten, wie einer Seriennummer oder einer mit dem Rasenmähroboter verknüpften E-Mail-Adresse, den betreffenden Rasenmähroboter aus und initiiert anschließend eine z.B. tokenbasierte Zugriffsanfrage für einen als Remote-Zugriff realisierten Schreibzugriff auf die mähplanrelevanten Betriebseinstelldaten des Rasenmähroboters. Für diese Initialisierung der Zugriffsanfrage wählt er z.B. einen zugehörigen Absprung zur zugehörigen Geräte-App 5 aus. Bei der mit dem Rasenmäher verknüpften E-Mail-Adresse kann es sich insbesondere um eine E-Mail-Adresse handeln, die in einem Kundenaccount für den Besitzer des Arbeitsgerätes 1 abgelegt ist.

Durch das Zulassen des angefragten Datenzugriffs gibt der Anwender 16 den Schreibzugriff auf diese Betriebseinstelldaten temporär frei, so dass der Schreibzugriff vom Support-Dienst 11 bzw. Händler-Dienst 12 ausgeführt werden kann. Hierbei tauscht die Geräte-App 5 entsprechende Daten mit der Datenbereitstellungsvorrichtung 2 aus, welche u.a. die mähplanrelevanten Betriebseinstelldaten des betreffenden Rasenmähroboters bereithält. Der Service-Mitarbeiter vom Support-Dienst 11 bzw. Händler-Dienst 12 kann auf diese Weise nach erfolgter Authentifikation des Schreibzugriffs die besagten Daten von der Datenbereitstellungsvorrichtung 2 abrufen, einsehen und bei Bedarf verändern, wie beispielsweise Daten bezüglich Mähzeiten, Mähdauern, der Schnitthöhe oder der Empfindlichkeit eines geräteseitigen Regensensors. Die veränderten Betriebseinstelldaten des Rasenmähroboters werden dann wieder in der Datenbereitstellungsvorrichtung 2 hinterlegt. Das nur temporäre Zugriffsrecht kommt einer hohen Betriebssicherheit bzw. einem hohen Datenschutz zugute. Weiter kann optional festgelegt sein, dass der Service-Mitarbeiter des Support-Dienstes 11 bzw. Händler-Dienstes 12 zu jedem Zeitpunkt nur auf ein Arbeitsgerät 1 zugreifen darf und der Schreibzugriff z.B. auf eine Schreibzugriffsdauer von maximal ca. 10 Minuten bis 20 Minuten begrenzt ist und der Lesezugriff auf eine Lesezugriffsdauer von maximal ca. 100 Minuten bis 140 Minuten begrenzt ist. Der Schreib-/Lesezugriff auf das aktuell bearbeitete Arbeitsgerät 1 wird in einer entsprechenden Systemrealisierung automatisch beendet, wenn über die Service-App 7 eine neue Zugriffsanfrage für einen Schreib-/Lesezugriff auf ein anderes Arbeitsgerät 1 gestartet wird, auch wenn die maximale Zugriffszeit noch nicht erreicht ist.

Je nach Systemausführung erfolgt für die Durchführung des Lese- und/oder Schreibzugriffs auf die Betriebseinstelldaten des Arbeitsgeräts 1 bzw. der Kommunikations-Zwischenstation 3 ein Datenaustausch zwischen dem Frontend 25 der Service-App 7, Schnittstellen des Backends 26 der Service-App 7, einem Backend der Datenbereitstellungsvorrichtung 2, z.B. einem Cloud-Backend, und weiteren Schnittstellen, wie Cloud-Schnittstellen, bei denen es sich beispielsweise um APIs (Application Programming Interfaces) handeln kann.

Wie die gezeigten und die weiteren oben erläuterten Ausführungsbeispiele deutlich machen, stellt die Erfindung ein webbasiertes Arbeitsgerätsystem und ein für ein solches verwendbares Datenzugriffsverfahren zur Verfügung, die vorteilhafte Funktionen insbesondere im Hinblick auf eine effiziente Serviceunterstützung der Anwender der Arbeitsgeräte mit einer hohen Betriebssicherheit von gerätebezogenen Daten bieten. Service-Dienste können den Anwender des Arbeitsgerätes z.B. bei der Veränderung von für den Gerätebetrieb relevanten Betriebseinstelldaten unterstützen, ohne dass der Anwender hierfür an den Ort des Service-Dienstes kommen muss. Die Serviceleistung kann direkt, d.h. zeitsynchron, insbesondere optional in Echtzeit, erbracht werden, solange Anwender und Service-Dienst z.B. telefonisch in Kontakt stehen. Dem Service-Dienst ist der Zugriff auf die Betriebseinstelldaten nur nach Autorisierung durch den Anwender und nur temporär möglich. Alle diese Eigenschaften tragen zu einer hohen Akzeptanz und einem hohen Nutzungskomfort der Arbeitsgeräte für den Anwender bei.

## Patentansprüche

1. Webbasiertes Arbeitsgerätsystem mit
- mindestens einem Arbeitsgerät (1), insbesondere einem Garten- oder Forstbearbeitungsgerät,
- einer Datenbereitstellungsvorrichtung (2) zur Bereitstellung von Geräteinformationsdaten und Betriebseinstelldaten des Arbeitsgerätes (1),
- einer geräteseitigen Datenkommunikationseinheit (3) und einer langreichweitigen Datenaustauschverbindung (4), insbesondere einer Internetverbindung, zwischen der geräteseitigen Datenkommunikationseinheit (3) und der Datenbereitstellungsvorrichtung (2),
- einer Geräte-App (5) mit Schreiblesezugriff auf die Betriebseinstelldaten des Arbeitsgerätes (1) in der Datenbereitstellungsvorrichtung (2),
- einem Nutzer-Endgerät (6) zur nutzerseitigen Bedienung der Geräte-App (5),
- einer Service-App (7) mit Lesezugriff auf die Geräteinformationsdaten in der Datenbereitstellungsvorrichtung (2) und mit temporärem Schreibzugriff auf die von der Datenbereitstellungsvorrichtung (2) bereitgestellten Betriebseinstelldaten des Arbeitsgerätes (1), wobei der temporäre Schreibzugriff eine nutzerseitige Zugriffsfreigabe über die Geräte-App (5) erfordert, und
- einem Service-Endgerät (8) zur serviceseitigen Bedienung der Service-App (7).

2. Webbasiertes Arbeitsgerätsystem nach Anspruch 1, wobei sich die geräteseitige Datenkommunikationseinheit (3) im Arbeitsgerät (1) befindet oder von einer Kommunikations-Zwischenstation (9) gebildet ist, der eine kurzreichweitige Datenaustauschverbindung (10) mit dem Arbeitsgerät (1) zugeordnet ist.

3. Webbasiertes Arbeitsgerätsystem nach Anspruch 1 oder 2, wobei der temporäre Schreibzugriff der Service-App (7) auf die Betriebseinstelldaten des Arbeitsgerätes (1) eine Zugriffsanfrage der Service-App (7) an die Geräte-App (5) für das Arbeitsgerät (1) beinhaltet, wobei die Zugriffsanfrage einer nutzerseitigen Freigabe bedarf.

4. Webbasiertes Arbeitsgerätsystem nach Anspruch 3, wobei die Zugriffsanfrage eine tokenbasierte Zugriffsanfrage ist und über einen Absprung in der Service-App (7) zur Geräte-App (5) auswählbar ist.

5. Webbasiertes Arbeitsgerätsystem nach Anspruch 3 oder 4, wobei die Geräteinformationsdaten Geräteidentifikationsdaten umfassen, welche die Service-App (7) zur Identifikation des Arbeitsgerätes (1) für die Zugriffsanfrage an die Geräte-App (5) und/oder für den temporären Schreibzugriff auf die von der Datenbereitstellungsvorrichtung (2) bereitgestellten Betriebseinstelldaten des Arbeitsgerätes (1) nutzt.

6. Webbasiertes Arbeitsgerätsystem nach einem der Ansprüche 1 bis 5, wobei der temporäre Schreibzugriff Teil eines temporären Schreib-/Lesezugriff mit einem Schreibzugriff für eine vorgegebene Schreibzugriffsdauer und einem Lesezugriff für eine vorgegebene Lesezugriffsdauer umfasst, wobei die Lesezugriffsdauer gleich lang oder länger ist als die Schreibzugriffsdauer.

7. Webbasiertes Arbeitsgerätsystem nach einem der Ansprüche 1 bis 6, wobei die Service-App (7) einen freigegebenen temporären Schreibzugriff auf die Betriebseinstelldaten eines von mehreren Arbeitsgeräten (1) vorzeitig beendet, wenn sie eine neue Zugriffsanfrage für einen temporären Schreibzugriff auf die Betriebseinstelldaten eines anderen Arbeitsgerätes (1) an dessen zugeordnete Geräte-App (5) sendet.

8. Webbasiertes Arbeitsgerätsystem nach einem der Ansprüche 1 bis 7, wobei das Nutzer-Endgerät (6) ein Smart-Device ist und/oder das Arbeitsgerät (1) ein autonomes Arbeitsgerät, insbesondere ein Rasenmähroboter, oder eine Motorsäge oder ein anderes Garten- oder Forstbearbeitungsgerät oder ein Bau-Arbeitsgerät oder ein Heimwerkergerät ist.

9. Datenzugriffsverfahren, insbesondere für ein webbasiertes Arbeitsgerätsystem nach einem der Ansprüche 1 bis 8, zum Zugreifen auf von einer Datenbereitstellungsvorrichtung (2) bereitgestellte Betriebseinstelldaten eines Arbeitsgerätes (1) durch eine Service-App (7), wobei
- nutzerseitig eine Serviceanforderung übertragen wird, die eine Identifikationsinformation und eine Servicewunschinformation zu dem Arbeitsgerät (1) umfasst,
- serviceseitig die Serviceanforderung empfangen wird und von der Service-App (7) eine Zugriffsanfrage an eine betreffende Geräte-App (5) für einen temporären Schreibzugriff auf die von der Datenbereitstellungsvorrichtung (2) bereitgestellten Betriebseinstelldaten des Arbeitsgerätes (1) gesendet wird,
- nutzerseitig über die Geräte-App (5) die Zugriffsanfrage empfangen und der angefragte temporäre Schreibzugriff auf die von der Datenbereitstellungsvorrichtung (2) bereitgestellten Betriebseinstelldaten des Arbeitsgerätes (1) freigegeben wird,
- die Betriebseinstelldaten des Arbeitsgerätes (1) in der Datenbereitstellungsvorrichtung (2) durch die Service-App (7) während des freigegebenen temporären Schreibzugriffs entsprechend der Servicewunschinformation durch Schreibzugriff geändert werden können und
- der freigegebene temporäre Schreibzugriff nach Ablauf einer vorgegebenen Freigabedauer automatisch beendet wird.

10. Datenzugriffsverfahren nach Anspruch 9, wobei Daten zwischen einer geräteseitigen Datenkommunikationseinheit (3) und der Datenbereitstellungsvorrichtung (2) über eine langreichweitige Datenaustauschverbindung (4), insbesondere eine Internetverbindung, ausgetauscht werden.

11. Datenzugriffsverfahren nach Anspruch 10, wobei die geräteseitige Datenkommunikationseinheit (3) im Arbeitsgerät (1) angeordnet wird oder als eine Kommunikations-Zwischenstation (9) ausgebildet wird, die Daten mit dem Arbeitsgerät (1) über eine kurzreichweitige Datenaustauschverbindung (10) austauscht.

12. Datenzugriffsverfahren nach einem der Ansprüche 9 bis 11, wobei die Zugriffsanfrage durch eine tokenbasierte Zugriffsanfrage gebildet wird und über einen Absprung in der Service-App (7) zur Geräte-App (5) ausgewählt wird.

13. Datenzugriffsverfahren nach einem der Ansprüche 9 bis 12, wobei die Service-App (7) Geräteidentifikationsdaten als Geräteinformationsdaten zur Identifikation des Arbeitsgerätes (1) für die Zugriffsanfrage an die Geräte-App (5) und/oder für den temporären Schreibzugriff auf die in der Datenbereitstellungsvorrichtung (2) gespeicherten Betriebseinstelldaten des Arbeitsgerätes (1) nutzt.

14. Datenzugriffsverfahren nach einem der Ansprüche 9 bis 13, wobei die Freigabedauer für einen Schreibzugriff als Schreibzugriffsdauer und für einen Lesezugriff als Lesezugriffsdauer vorgegeben wird, wobei die Lesezugriffsdauer gleich lang oder länger vorgegeben wird als die Schreibzugriffsdauer.

15. Datenzugriffsverfahren nach einem der Ansprüche 9 bis 14, wobei ein freigegebener temporärer Schreibzugriff auf die Betriebseinstelldaten eines von mehreren Arbeitsgeräten (1) vorzeitig beendet wird, wenn von der Service-App (7) eine neue Zugriffsanfrage für einen temporären Schreibzugriff auf die Betriebseinstelldaten eines anderen Arbeitsgerätes (1) an dessen zugeordnete Geräte-App (5) gesendet wird.
